# EUROPÄISCHE PATENTSCHRIFT

(11) **EP 1 316 409 B1**
(45) Veröffentlichungstag und Bekanntmachung des Hinweises auf die Patenterteilung: **01.02.2006**
(21) Anmeldenummer: 02025970.1
(22) Anmeldetag: 21.11.2002
(51) Int. Cl.: B29C 70/24, B29C 65/00, F16F 7/00, B60R 19/03

(54) **Faserverbund-Crashstruktur und Verwendungen einer solchen Crashstruktur**
Crash-structure made of fibre reinforced composite material and uses of such a structure
Absorbeur de chocs en matériau composite et utilisations d'un tel absorbeur de chocs

(30) Priorität: 01.12.2001 DE 10159067
(43) Veröffentlichungstag der Anmeldung: 04.06.2003
(73) Patentinhaber: DaimlerChrysler AG, 70567 Stuttgart (DE)
(72) Erfinder: Bechtold, Michael, 71297 Mönsheim (DE); Drechsler, Klaus, Dr., 83620 Feldkirchen-Westerham (DE); Maidl, Franz, 94574 Wallerfing (DE); Möltgen, Bruno, Guildford Surrey, GU1 1BW (GB); Strachauer, Frank, 82319 Starnberg (DE)

(56) Entgegenhaltungen:
- DE-A- 3 049 425
- FR-A- 2 761 434
- US-A- 4 768 323
- US-A- 5 827 383
- US-A- 6 129 962
- PATENT ABSTRACTS OF JAPAN vol. 1995, no. 01, 28. Februar 1995 (1995-02-28) & JP 06 286537 A (KOBE STEEL LTD), 11. Oktober 1994 (1994-10-11)

## Beschreibung

Die vorliegende Erfindung betrifft eine Faserverbund-Crashstruktur, insbesondere für einen Kfz-Längsträger, gemäß dem Patentanspruch 1.

Crashstrukturen, Deformationselemente und Energieabsorber werden im Fahr- und Flugzeugbau sowie in der Bahn- und Hubschraubertechnik zur Erhöhung der Sicherheit in vielfältigen Bauformen und an verschiedenen Stellen eingesetzt. Diese energieabsorbierenden Bauteile bestehen beispielsweise aus Stahl oder Aluminiumblech bzw. Alu-Strangpressprofilen. Darüber hinaus wurden in den letzten Jahren vermehrt Faserverbundwerkstoffe eingesetzt, primär auf Grund der damit verbundenen Möglichkeit der Gewichtseinsparung.

Bei Kraftfahrzeugen haben sich insbesondere im Front- und Heckbereich Deformationselemente mit rohrförmigem Aufbau bewährt. Eine derartige rohrförmige Struktur, gemäß dem Oberbegriff des Anspruchs 1, ist z. B. aus der DE 30 49 425 A1 bekannt. Hierbei weist das als offener Hohlkörper ausgebildete Crashschutzbauteil zur irreversiblen Energieaufnahme bei Druckbelastungen in Längsrichtung eine netzwerkförmige Mantelfläche aus einem Faserverbundstrang auf. Das Rohr dient bei geringen Druckbelastungen in Rohrlängsrichtung einer elastischen, reversiblen Abstützung und nimmt bei größeren Belastungen unter bleibender Verformung irreversibel Energie auf.

Ferner ist in der DE 38 33 048 A1 ein Stossfänger für Kraftfahrzeuge beschrieben, der konisch angeordnete Prallrohre aus wenigstens einem Faserverbundwerkstoff aufweist. Die konisch zueinander mit radialem Abstand angeordneten Prallrohre sind derart angeordnet, dass sich ihre Längsachse zumindest annähernd in Fahrzeuglängsrichtung und damit in Fahrtrichtung erstreckt, wobei die Fasern zumindest im wesentlichen in Rohrlängsrichtung ausgerichtet sind. Als Fasern werden Glasfasern, Kohlenstofffasern oder Aramidfasern verwendet.

Daneben ist aus der DE 43 17 738 A1 ein zylindrisch ausgebildeter Energieabsorber aus faserverstärktem Verbundmaterial bekannt, bei dem die Faser zumindest in eine Umfangsrichtung des Körpers gewickelt ist. Ferner ist die Dicke des hohlförmig ausgebildeten Energieabsorbers in Axialrichtung in wenigstens zwei Stufen nach und nach ansteigend ausgebildet.

Ferner ist in EP 0 683 072 B1 ein weiterer hohlförmiger Stossabsorber beschrieben, der die Form einer Stufenpyramide aufweist bzw. dessen Mantelflächen terassenförmig ausgebildet ist. Die Energieabsorption erfolgt hierbei überwiegend durch aufeinanderfolgende Schervorgänge, wobei der Werkstoff des Stossabsorbers aus formstabil verpresstem Faserwerkstoff besteht.

Die bekannten Anordnungen haben jedoch zum Großteil den Nachteil, dass ein hohes Energieaufnahmevermögen nur bei einem 0-Grad-Aufprall möglich ist. Wirkt hingegen der Aufprall unter einem Winkel zur Längsrichtung des Absorberelements ein, so kommt es nicht zu einem gleichmäßigen Versagensverhalten.

Ferner ist es von Nachteil, dass die bekannten Anordnungen nur geringe Strukturintegrität aufweisen. Das heißt, die Struktur splittert beim Absorbieren der Aufprallenergie in große Bruchfragmente. Derartige Bruchfragmente stellen jedoch eine hohe Verletzungsgefahr dar und sind somit unerwünscht.

Ferner lässt sich das Crashverhalten der bekannten Strukturen nur schlecht kalkulieren und ein hoher experimenteller Aufwand ist erforderlich, um das Crashverhalten vorherzusagen.

Daneben ist bei manchen Bauteilen aus Faserverbundmaterial die Herstellung mit einem hohen Handarbeitsanteil verbunden, da aus flächigen Faserverbundhalbzeugen 3D-Strukturen gefertigt werden müssen. Dies bringt in der Regel nicht nur einen hohen Verschnitt des flächigen Halbzeugs mit sich, sondern führt auch zu einer langsamen und somit teuren Fertigung.

Der Erfindung liegt die Aufgabe zugrunde, eine Faserverbund-Crashstruktur mit reproduzierbarem Crashverhalten und optimaler Strukturintegrität zu schaffen, das zudem kostengünstig herstellbar ist.

Die Aufgabe wird gemäß einer ersten Ausführungsform durch eine Faserverbund-Crashstruktur, die einen ganz oder teilweise aus Faserverbundwerkstoff hergestellten Hohlkörper aufweist, gelöst, die sich erfindungsgemäße dadurch auszeichnet, dass innerhalb des Hohlkörpers im wesentlichen in dessen Längsrichtung verlaufend ein Stegelement angeordnet ist, wobei das Stegelement mit dem Hohlkörper im wesentlichen im Berührungsbereich von Stegelement und Hohlkörper derart miteinander verbunden ist, dass die Struktur durch Verstärkungselemente verstärkt ist, wobei das Stegelement mit dem Hohlközper im wesentlichen im Bezührungsbereich durch Tuften miteinander vermäht ist.

Das Nähverfahren hat den Vorteil der einfachen Handhabbarkeit. Zudem ist es leicht in automatisierte Herstellungsabläufe integrierbar. Dies bedeutet, dass zumindest eine teilautomatisierte Fertigung möglich ist, so dass kürzere Fertigungszeiten und geringerer Personalaufwand erforderlich sind, was zu einer deutlichen Kostenreduktion führt.

Bei dieser Ausführungsform weist der Hohlkörper einen beliebigen Querschnitt auf. Zweckmäßig ist jedoch, dass der Querschnitt eine längliche, ovale, elliptische, kreisförmige oder eckige Form aufweist.

Die zweite Ausführungsform der erfindungsgemäßen Faserverbund-Crashstruktur zeichnet sich dadurch aus, dass der Hohlkörper einen kreisförmigen Querschnitt aufweist.

Die erfindungsgemäße Crashstruktur aus Faserverbundwerkstoff hat neben der Gewichtsreduzierung den Vorteil einer hohen spezifischen Energieaufnahme. Auch bei einem Schrägaufprall weist das Bauteil eine hohe Strukturintegrität sowie ein optimales Crashverhalten auf. Daneben kann das Absorptionsverhalten gut vorhergesagt und auf einfache Weise an gewünschte Anforderungen angepasst werden.

Vorteilhafterweise sind die Verstärkungselemente im wesentlichen in Dickenrichtung der Hohlkörperwand verlaufend angeordnet. Aufgrund der Orientierung der Verstärkungselemente wird der auf die Struktur wirkende Stoss optimal absorbiert und insbesondere die Energieaufnahme bei schrägem Aufprall wesentlich verbessert. Daneben weist eine derartig verstärkte Struktur eine bessere Strukturintegrität auf, so dass im Crashfall ein Ab- bzw. Aufsplittern von Bruchfragmenten vermieden wird.

Ferner ist es zweckmäßig die Verstärkungselemente ganz oder abschnittsweise in Umfangsrichtung des Hohlkörpers verlaufend sowie entlang dessen Längsrichtung anzuordnen.

Es ist von besonderem Vorteil, dass der Abstand der Verstärkungselemente sowohl in Umfangsrichtung des Hohlkörpers als auch in dessen Längsrichtung zum Anpassen der Energieaufnahmefähigkeit der Struktur variabel einstellbar ist. Das heißt, das Absorptionsverhalten ist auf einfache Weise - durch Variation der Dichte der Verstärkungselemente - an einen gewünschten Kraft-Weg-Verlauf anpassbar. Dies ist insofern vorteilhaft, da im Gegensatz zu bekannten Strukturen bei einer Anpassung des Absorptionsverhalten kein neues Design und somit auch keine neuen Werkzeuge zur Herstellung der Struktur erforderlich sind. Dies stellt eine äußerst effektive, Kosten als auch Zeit sparende Form der Anpassung dar.

Zweckmäßigerweise sind die Verstärkungselemente Nähfäden aus Glas- und Armidfasern, wobei die Verwendung von Glasfasern kostengünstiger ist.

Darüber hinaus ist es vorteilhaft, dass der Hohlkörper in Längsrichtung eine konische Form aufweist und eine variable, in Längsrichtung stufenförmig ausgebildete Wandstärke aufweist. Alternativ kann der Hohlkörper eine in Längsrichtung kontinuierlich zunehmende Wandstärke aufweisen. Dadurch wird auf bekannte Weise der Pegel der maximalen Krafteinwirkung eingestellt, so dass mit einfachen Mitteln ein Rückhaltesystem realisiert wird.

Gemäß einer besonders bevorzugten Ausführungsform besteht der Hohlkörper aus einem Faserverbundgeflecht. Die Verwendung eines Faserverbundgeflechts ist aufgrund der endkonturnahen und automatisierten Fertigung zweckmäßig. Dabei kommt es kaum zu einem Verschnitt, wie das beispielsweise bei der Verwendung anderer 2D-Multiaxialgelege oder Gewebe der Fall ist, so dass zudem die Materialkosten reduziert werden. Aufgrund der teilautomatisierten Fertigung kommt es zudem zu kürzeren Fertigungszeiten bei geringerem Personalaufwand.

Bei der Ausführungsform mit Stegelement weist dieses zweckmäßigerweise ein doppeltes T-Profil auf, wobei T-förmige Abschnitte des Stegelements über einen Mittelbereich miteinander verbunden sind und die T-förmigen Abschnitte die näher benachbarten gegenüberliegenden Seitenflächen des Hohlkörpers miteinander verbindet. Auf diese Weise wird der Crashstruktur eine hohe Stabilität verliehen.

Es ist ferner vorteilhaft, dass das Stegelement ebenso wie der Hohlkörper aus Faserverbundwerkstöff besteht. Dabei ist es besonders zweckmäßig, dass das Stegelement aus einem vernähten Multiaxialgelege besteht, wobei die Faserausrichtungen des Multiaxialgeleges einen Winkel von 45° bezüglich der Längsausdehnung aufweist. Die Verwendung eines Multiaxialgeleges ermöglicht eine kraftlinienorientierte Anordnung. Die -45°-Orientierung ergibt eine optimale Schubfestigkeit und gewährleistet eine volle Funktionstüchtigkeit des Geamtsystems auch bei winkligem Aufprall (Schrägaufprall). Zudem lässt sich ein derartiger T-Profil-Steg aus einem Multiaxialgelege relativ einfach und kostengünstig herstellen.

Vorzugsweise findet die erfindungsgemäße Crashstruktur als Crashlängsträger in einem Personenkraftfahrzeug Anwendung. Darüber hinaus kann die Faserverbund-Crashstruktur als Deformationselement in einem Flugzeug, einem Hubschrauber oder einem Schienenfahrzeug verwendet werden.

Im folgenden wird die Erfindung anhand der beigefügten Abbildungen einer bevorzugten Ausführungsform in näheren Einzelheiten erläutert. In denen zeigt:
- Fig. 1: eine schematische, dreidimensionale Darstellung einer ersten Ausführungsform der erfindungsgemäßen Faserverbund-Crashstruktur;
- Fig. 2: eine dreidimensionale Darstellung eines innerhalb des Hohlkörpers angeordneten Stegelementes;
- Fig. 3: eine schematische Querschnittsansicht der in Fig. 1 dargestellten Faserverbund-Crashstruktur und
- Fig. 4: einen vergrößerten Ausschnitt des Berührungsbereiches zwischen Stegelement und Hohlkörper.

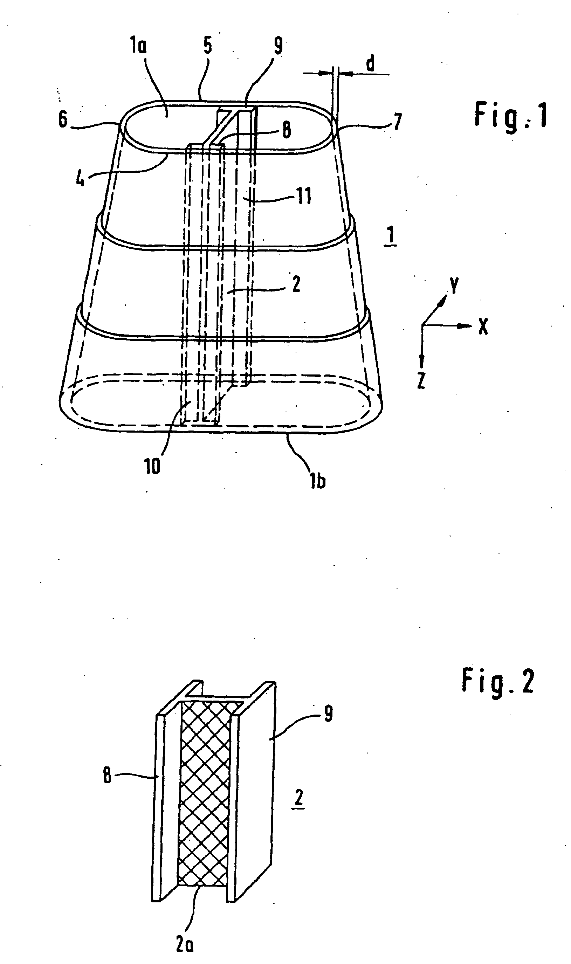

Fig. 1 zeigt in dreidimensionaler Darstellung eine erste Ausführungsform der erfindungsgemäßen Faserverbund-Crashstruktur. Die Faserverbund-Crashstruktur besteht aus einem Hohlkörper 1 aus Faserverbundwerkstoff. Der Hohlkörper 1 hat vorzugsweise eine konische Form und besteht aus einem Fasergeflecht, das beispielsweise mit Hilfe einer Rundflechtmaschine hergestellt wird. Das Geflecht wird üblicherweise auf einen geeignet geformten Dorn (nicht dargestellt) aufgebracht. Selbstverständlich kann der Hohlkörper auch aus anderen Faserverbundwerkstoffen bzw. mit anderen Techniken hergestellt werden.

Die Wandstärke d der in Fig. 1 dargestellten Ausführungsform ist stufen- bzw. terassenförmig ausgebildet. Dabei nimmt die Dicke d der Hohlkörperwand abschnittsweise von der konisch zulaufenden Seite 1a zur aufgeweiteten Seite 1b zu, wobei aus fertigungstechnischen Gründen es vorzuziehen ist, dass nur die Außenwand abschnittsweise dicker wird, wie in Fig. 1 dargestellt, da die Innenseite des Hohlkörpers 1 bei der Herstellung beispielsweise mittels Flechten kontinuierlich an dem nicht dargestellten Dorn anliegt. Durch das abschnittsweise Anwachsen der Wandstärke d wird der jeweilige Pegel maximaler Krafteinwirkung eingestellt, wodurch im wesentlichen ein Rückhaltesystem realisiert ist. Daneben kann auch in gleicher Weise ein Hohlkörper mit konstanter oder kontinuierlich anwachsender Wandstärke verwendet werden. Die genannten Beispiele dienen lediglich der Erläuterung und stellen keine Einschränkung dar.

Der Hohlkörper in Fig. 1 weist in X-Y-Ebene betrachtetet einen länglichen Querschnitt auf, wobei zwei im wesentlichen parallel verlaufende Seitenflächen 4 und 5 über gekrümmte Bereiche 6 und 7 miteinander verbunden sind. Der Abstand der gegenüberliegenden Seitenflächen 4 und 5 ist dabei wesentlich kleiner als der der gegenüberliegenden gekrümmten Bereiche 7 und 6. Alternativ kann der Querschnitt des Hohlkörpers elliptisch bzw. oval ausgebildet sein. In diesem Fall sind die Seitenflächen 4 und 5 ebenso wie die Seitenflächen 7 und 6 gekrümmt ausgebildet, wobei der Krümmungsradius der Seitenflächen 4 und 5 jedoch wesentlich größer als der der Seitenflächen 7 und 6 ist. Daneben können je nach zur Verfügung stehendem Raum auch andere geeignete Querschnitte verwendet werden.

Fig. 1 zeigt ferner, dass im Inneren des Hohlkörpers 1 ein Stegelement 2 angeordnet ist, das sich im wesentlichen in Längsrichtung erstreckt. Die Längsrichtung entspricht dabei der in Fig. 1 mit Z bezeichneten Richtung. Das Stegelement 2 weist ein doppeltes T-Profil auf, wobei die mit Bezugsziffern 8 und 9 bezeichneten T-förmigen Abschnitte des Stegelements 2 in Berührung mit den Seitenflächen 4 bzw. 5 des Hohlkörpers 1 stehen. Die Abschnitte 8 und 9 des Stegelementes 2 berühren die Innenfläche des Hohlkörpers 1, so dass sich im Bereich der Seitenfläche 4 ein Berührungsbereich 10 sowie im Bereich der Seitenfläche 5 ein Berührungsbereich 11 ergibt. Die Berührungsbereiche 10 und 11 erstrecken sich dabei über die gesamte Längsrichtung Z des Stegelementes 2.

In Fig. 2 ist das Stegelement 2 separat in dreidimensionaler Darstellung gezeigt. Die T-förmig ausgebildeten Abschnitte des Stegelements 2 sind wiederum mit Bezugsziffern 8 und 9 bezeichnet. Das Stegelement 2 ist ebenso wie der Hohlkörper 1 aus einem Faserverbundwerkstoff hergestellt. Vorzugsweise besteht das Stegelement 2 aus einem vernähten Multiaxialgelege, dessen Fasern jeweils bevorzugt im 45° Winkel bezüglich der Längsausrichtung Z ausgerichtet sind. Die 45° Ausrichtung der Fasern ist in Fig. 2 schematisch für den die T-förmigen Abschnitte 8 und 9 verbindenden Mittelbereich 2a angedeutet. Eine gleich Faserausrichtung kann für die T-förmigen Abschnitte 8, 9 verwendet werden. Eine derartige Ausrichtung der Fasern ist für die Energieabsorption des erfindungsgemäßen Crashelementes besonders geeignet für Schrägaufprall. Selbstverständlich kann die Ausrichtung der Fasern in gewünschter Weise an andere Krafteinwirkungen angepasst werden.

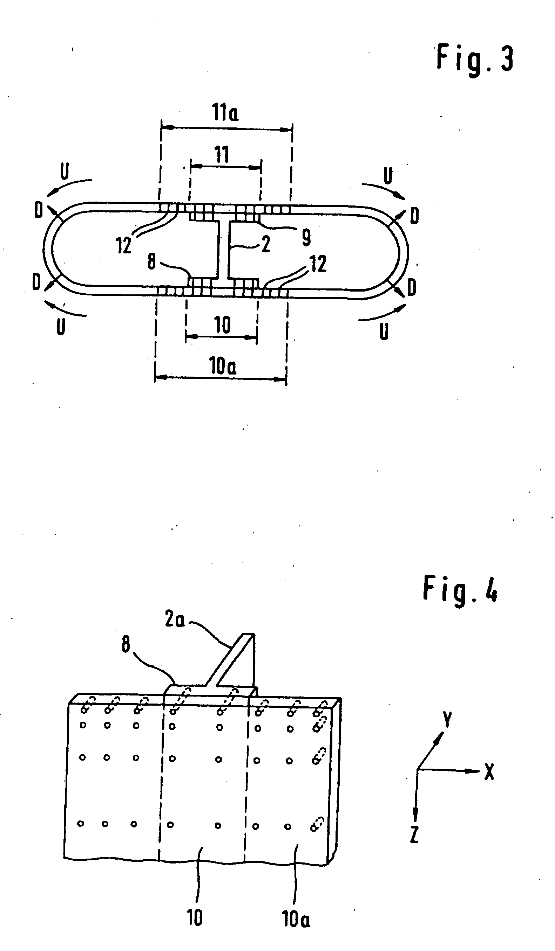

Fig. 3 zeigt in schematischer Darstellung eine Querschnittsansicht in X-Y Ebene, der in Fig. 1 dargestellten Faserverbund-Crashstruktur. Das Stegelement 2 ist mit seinen T-förmigen Abschnitten 8, 9 in Berührung mit der Innenseite des Hohlkörpers 1 und mit dem Hohlkörper 1 vernäht. Durch das Vernähen, das hauptsächlich in dem im wesentlichen in Z-Richtung verlaufenden Berührungsbereich 10 und 11 erfolgt, werden Verstärkungselemente 12 in die Struktur eingeführt. Das Vernähen kann aber auch über diese Bereiche jeweils in Umfangsrichtung verlaufend erweitert werden, was in der Fig. 3 schematisch durch einen erweiterten Bereich 10a bzw. 11a angedeutet ist. Die Umfangsrichtung ist in Fig. 3 schematisch durch Pfeilrichtungen U angegeben. Selbstverständlich können die in Form von Nähfäden eingeführten Verstärkungselemente 12 auch über den gesamten Umfang des Hohlkörpers 1 angeordnet sein. In diesem Fall erstrecken sich entsprechend die sogenannten erweiterten Bereiche über den gesamten Umfang.

Das Vernähen erfolgt vorzugsweise durch Tuften. Dies hat den Vorteil, dass keine Verschlingung auf der Nährückseite - also auf der Hohlkörperinnenseite - entsteht. Die Verstärkungselemente bzw. Nähfäden 12 werden quasi stiftförmig, senkrecht zur Außenwand des Hohlkörpers 1 verlaufend in die Berührungsbereiche 10, 11 bzw. 10a, 11a eingeführt. Dies bedeutet, dass die Verstärkungselemente 12 im wesentlichen in Dickenrichtung der Hohlkörperwand verlaufen. Die Dickenrichtung ist in Fig. 3 durch Pfeilrichtungen D angegeben. Sie verläuft also in der X-Y-Ebene.

Als Nähfäden dienen typischerweise Glasfasern oder Aramidfasern. Aufgrund der in Dickenrichtung D verlaufenden Fasern wird das Energieabsorptionsverhalten der Faserverbund-Crashstruktur wesentlich verbessert und optimiert. Zudem wird durch das Anbringen der Verstärkungselemente eine Delamination von Stegelement 2 und Hohlkörper 1 im Crashfall vermieden. Dies bedeutet, dass die erfindungsgemäße Crashstruktur eine hohe Strukturintegrität aufweist, d. h., dass kein Absplittern großer Bruchfragmente im Crashfall auftritt. Es erfolgt ein gleichmäßiges Zerbröseln der aus Faserverbundwerkstoff hergestellten Struktur. Aufgrund der Faserverstärkung wird somit eine hohe spezifische Energieaufnahme bei optimalem Crashverhalten erzielt.

Ferner ist anzumerken, dass das Crashverhalten auf einfache Weise angepasst bzw. variiert werden kann, beispielsweise durch Ändern des Stichabstandes. Dies führt zu einer unterschiedlichen Dichte der in Dickenrichtung verlaufenden Fasern. Mit anderen Worten, aufgrund der Änderung des Abstandes der Fasern kann das Absorptionsverhalten des erfindungsgemäßen Crashelements auf einfache Art und Weise angepasst werden. Dies ist insofern von Vorteil, da bei bisherigen Crashstrukturen bei einer erneuten Optimierung ein neues Design erforderlich ist, und damit auch neue Herstellungswerkzeuge, was einen großen Herstellungsaufwand und damit auch einen langen Bearbeitungszyklus erfordert. Dagegen kann bei der erfindungsgemäßen Struktur die Form des Hohlkörpers sowie des Stegelementes beibehalten werden. Lediglich der Abstand der faserförmigen Verstärkungselemente 12 wird variiert. Die Variation der gegenseitigen Beabstandung der einzelnen Fasern kann selbstverständlich sowohl in Z-Richtung als auch in Umfangsrichtung U variiert werden. Dies ist schematisch in Fig. 4 dargestellt, in der der Berührungsbereich 10 bzw. der erweiterte Berührungsbereich 10a in dreidimensionaler Darstellung vergrößert dargestellt ist. Selbstverständlich können neben der in Fig. 4 dargestellten Dichtevariation je nach Anforderung auch beliebig andere Variationen gewählt werden.

Daneben hat die erfindungsgemäße Faserverbund-Crashstruktur den Vorteil, dass sie kostengünstig herstellbar ist. Zunächst wird das Stegelement, wie bereits beschrieben, z.B. aus vernähtem Multiaxialgelege hergestellt. Anschließend wird das Stegelement 2 durch entsprechend geformte Kerne gehalten. Der Außenumfang der Kerne ist dabei so gestaltet, dass er der konischen Form des Hohlkörpers 1 entspricht und als Dorn für den nächsten Bearbeitungsschritt dient. Auf diesen aus den Kernelementen bestehenden Dorn wird anschließend der Hohlkörper durch Flechten aufgebracht. Das Flechten kann beispielsweise mit einer Rundflechtmaschine erfolgen. Anschließend wird das Stegelement mit dem Hohlkörper, wie oben beschrieben, vernäht. Dabei kann der Dorn entweder innerhalb des Hohlkörpers verbleiben, was insbesondere für einen anschließenden Transport empfehlenswert ist, er kann jedoch auch entfernt werden. Vor dem abschließend Imprägnieren der Faserverbund-Crashstruktur wird der Dorn entfernt. Der Imprägniervorgang erfolgt beispielsweise mittels RTM (Reaction Transfer Molding) oder mittels RI (Resin Injection)

Abschließend sei angemerkt, dass gemäß einer weiteren Ausführungsform der Hohlkörper einen kreisförmigen Querschnitt aufweist, so dass gegebenenfalls auf das Stegelement verzichtet werden kann. In diesem Fall werden die in Dickenrichtung verlaufenden Verstärkungselemente, die in Umlaufrichtung U als auch in Längsrichtung Z angeordnet sind, durch Nähen an gewünschte Stellen in die Hohlkörperwand eingeführt. Im übrigen unterscheidet sich die zweite Ausführungsform nicht von der im Zusammenhang mit Fig. 1-4 beschriebenen ersten Ausführungsform.

Die erfindungsgemäße Faserverbund-Crashstruktur findet insbesondere als Crashlängsträger in Personenkraftwagen Anwendung. Daneben können auch andere Hohlkörperformen verwendet werden, die beispielsweise als Deformationselement in der Flugzeugtechnik, Hubschraubertechnik oder bei Schienenfahrzeugen in analoger Weise Anwendung finden.

## Patentansprüche

1. Faserverbund-Crashstruktur, umfassend einen ganz oder teilweise aus Faserverbundwerkstoff hergestellten Hohlkörper (1),
**dadurch gekennzeichnet, dass** innerhalb des Hohlkörpers (1) im wesentlichen in dessen Längsrichtung (Z) verlaufend ein Stegelement (2) angeordnet ist, wobei das Stegelement (2) mit dem Hohlkörper (1) im wesentlichen im Berührungsbereich (10, 11; 10a, 11a) von Stegelement (2) und Hohlkörper (1) derart miteinander verbunden ist, dass die Struktur durch Verstärkungselemente (12) verstärkt ist, wobei das Stegelement (2) mit dem Hohlkörper (1) im wesentlichen im Berührungsbereich (10, 11, 10a, 11a) durch Tuften miteinander vernäht ist.

2. Faserverbund-Crashstruktur, umfassen einen ganz oder teilweise aus Faserverbundwerkstoff hergestellten Hohlkörper (1), wobei
der Hohlkörper (1) einen kreisförmigen Querschnitt aufweist.

3. Faserverbund-Crashstruktur nach Anspruch 1 oder 2, wobei
die Verstärkungselemente (12) im wesentlichen in Dickenrichtung (D) der Hohlkörperwand verlaufend angeordnet sind.

4. Faserverbund-Crashstruktur nach Anspruch 1 oder 2, wobei
die Verstärkungselemente (12) ganz oder abschnittsweise in Umfangsrichtung (U) des Hohlkörpers (1) verlaufend sowie entlang dessen Längsrichtung (Z) angeordnet sind.

5. Faserverbund-Crashstruktur nach Anspruch 1 oder 2, wobei
der Abstand der Verstärkungselemente (12) sowohl in Umfangsrichtung (U) als auch in Längsrichtung (Z) des Hohlkörpers (1) zum Einstellen der Energieaufnahmefähigkeit der Struktur variabel einstellbar ist.

6. Faserverbund-Crashstruktur nach Anspruch 2, wobei
die Verstärkungselemente (12) durch Tuften in die Hohlkörperwand eingenäht sind.

7. Faserverbund-Crashstruktur nach einem der vorangegangenen Ansprüche, wobei
die Verstärkungselemente (12) Nähfäden aus Glas- oder Aramidfasern sind.

8. Faserverbund-Crashstruktur nach Anspruch 1, wobei
der Hohlkörper (1) einen länglichen, ovalen, elliptischen, kreisförmigen, eckigen oder einen anderen geeigneten Querschnitt aufweist.

9. Faserverbund-Crashstruktur nach Anspruch 1 oder 2, wobei
der Hohlkörper (1) in Längsrichtung (Z) eine konische Form aufweist.

10. Faserverbund-Crashstruktur nach Anspruch 1 oder 2, wobei
der Hohlkörper (1) eine variable, in Längsrichtung (Z) stufenförmig ausgebildete Wandstärke (d) aufweist.

11. Faserverbund-Crashstruktur nach Anspruch 1 oder 2, wobei
der Hohlkörper (1) eine in Längsrichtung (Z) kontinuierlich zunehmende Wandstärke (d) aufweist.

12. Faserverbund-Crashstruktur nach Anspruch 1 oder 2, wobei
der Hohlkörper (1) ein Faserverbundgeflecht ist.

13. Faserverbund-Crashstruktur nach Anspruch 1, wobei
das Stegelement (2) ein doppeltes T-Profil aufweist, wobei T-förmige Abschnitte (8, 9) des Stegelementes (2) über einen Mittelbereich (2a) miteinander verbunden sind.

14. Faserverbund-Crashstruktur nach Anspruch 13, wobei
die T-förmigen Abschnitte (8, 9) des Stegelementes (2) die näher benachbarten gegenüberliegenden Seitenflächen (4, 5) des Hohlkörpers (1) miteinander verbinden.

15. Faserverbund-Crashstruktur nach Anspruch 1, wobei
das Stegelement (2) aus einem Faserverbundwerkstoff besteht.

16. Faserverbund-Crashstruktur nach Anspruch 1 , wobei
das Stegelement (2) ein vernähtes Multiaxialgelege ist.

17. Faserverbund-Crashstruktur nach Anspruch 16, wobei
das Multiaxialgewebe eine Faserausrichtung von 45° bezüglich der Längsrichtung (Z) des Stegelements (2) aufweist.

18. Verwendung der Faserverbund-Crashstrukturen nach einem der vorangegangenen Ansprüche als Crashlängsträger in einem Personenkraftfahrzeug.

19. Verwendung der Faserverbund-Crashstrukturen nach einem der Ansprüche 1 bis 17 in einem Flugzeug, einem Hubschrauber oder in einem Schienenfahrzeug.

## Claims

1. A fibre composite crash structure comprising a hollow body (1) made wholly or partially of a fibre composite material,
**characterised in that**
positioned inside the hollow body (1) and running essentially along its length (Z) is a strut element (2), the strut element (2) being connected to the hollow body (1) essentially in the areas of contact (10, 11; 10a, 11a) between the strut element (2) and the hollow body (1) in such a manner that the structure is reinforced by means of reinforcing elements (12), the strut element (2) being sewn together with the hollow body (1) by means of tufting essentially in the area of contact (10, 11; 10a, 11a).

2. A fibre composite crash structure comprising a hollow body (1) made wholly or partially of a fibre composite material,
the hollow body (1) having a circular cross-section.

3. A fibre composite crash structure in accordance with claim 1 or 2,
the reinforcing elements (12) being positioned running essentially across the width (D) of the hollow body wall.

4. A fibre composite crash structure in accordance with claim 1 or 2,
the reinforcing elements (12) being positioned running wholly or in sections around the circumference (U) of the hollow body (1) and along its length (Z).

5. A fibre composite crash structure in accordance with claim 1 or 2,
it being possible to adjust the distance between the reinforcing elements (12) both around the circumference (U) and along the length (Z) of the hollow body (1) in order to vary the energy absorption capacity of the structure.

6. A fibre composite crash structure in accordance with claim 2,
the reinforcing elements (12) being sewn into the wall of the hollow body by means of tufting.

7. A fibre composite crash structure in accordance with one of the preceding claims,
the reinforcing elements (12) being sewing threads made of glass or aramide fibres.

8. A fibre composite crash structure in accordance with claim 1,
the hollow body (1) having an elongated, oval, elliptical, circular, angular or other suitable cross-section.

9. A fibre composite crash structure in accordance with claim 1 or 2,
the hollow body (1) being shaped conically along its length (Z).

10. A fibre composite crash structure in accordance with claim 1 or 2,
the hollow body (1) having a variable wall thickness (d) which is stepped along its length (Z).

11. A fibre composite crash structure in accordance with claim 1 or 2,
the wall thickness (d) of the hollow body (1) increasing continuously along its length (Z).

12. A fibre composite crash structure in accordance with claim 1 or 2,
the hollow body (1) being a fibre composite braid.

13. A fibre composite crash structure in accordance with claim 1,
the strut element (2) having a double T-profile and T-shaped sections (8, 9) of the strut element (2) being connected together by a central area (2a).

14. A fibre composite crash structure in accordance with claim 13,
the T-shaped sections (8, 9) of the strut element (2) connecting the neighbouring opposite side faces (4, 5) of the hollow body (1) together.

15. A fibre composite crash structure in accordance with claim 1,
the strut element (2) being made of a fibre composite material.

16. A fibre composite crash structure in accordance with claim 1,
the strut element (2) being a sewn multi-axial fabric.

17. A fibre composite crash structure in accordance with claim 16,
the multi-axial fabric having a fibre orientation of 45° in relation to the length (Z) of the strut element (2).

18. The use of the fibre composite crash structure in accordance with one of the preceding claims as a crash side member in a passenger car.

19. The use of the fibre composite crash structure in accordance with one of claims 1 to 17 in an aircraft, a helicopter or a rail vehicle.

## Revendications

1. Absorbeur de chocs renforcé par fibres comprenant un corps creux (1) entièrement ou partiellement fabriqué en un matériau renforcé par fibres,
**caractérisé en ce qu'**un élément à nervure (2) est disposé dans le corps creux (1), en s'étendant sensiblement en direction longitudinale (Z) de ce dernier, l'élément à nervure (2) et le corps creux (1) étant reliés entre eux essentiellement dans la zone de contact (10 , 11 ; 10a, 11a) entre l'élément à nervure (2) et le corps creux (1) de façon à ce que l'absorbeur soit renforcé par des éléments de renfort (12), l'élément à nervure (2) étant cousu par tuftage avec le corps creux (1) essentiellement dans la zone de contact (10, 11, 10a, 11a).

2. Absorbeur de chocs renforcé par fibres comprenant un corps creux (1) entièrement ou partiellement fabriqué en un matériau renforcé par fibres, le corps creux (1) présentant une section transversale circulaire.

3. Absorbeur de chocs renforcé par fibres selon la revendication 1 ou 2, les éléments de renfort (12) étant essentiellement disposés de façon à s'étendre dans le sens de l'épaisseur (D) de la paroi du corps creux.

4. Absorbeur de chocs renforcé par fibres selon la revendication 1 ou 2, les éléments de renfort (12) étant disposés de façon à s'étendre totalement ou par sections dans le sens périphérique (U) du corps creux (1) , ainsi que le long du sens longitudinal (Z) de ce dernier.

5. Absorbeur de chocs renforcé par fibres selon la revendication 1 ou 2, la distance entre les éléments de renfort (12) étant réglable de façon variable aussi bien dans le sens périphérique (U) que dans le sens longitudinal (Z) du corps creux (1) pour le réglage de la capacité d'absorption d'énergie de l'absorbeur.

6. Absorbeur de chocs renforcé par fibres selon la revendication 2, les éléments de renfort (12) étant cousus par tuftage dans la paroi du corps creux.

7. Absorbeur de chocs renforcé par fibres selon l'une quelconque des revendications précédentes, les éléments de renfort (12) étant des fils à coudre ou des fibres de verre ou d'aramide.

8. Absorbeur de chocs renforcé par fibres selon la revendication 1, le corps creux (1) présentant une section transversale oblongue, ovale, elliptique, circulaire, polygonale ou toute autre section transversale adaptée.

9. Absorbeur de chocs renforcé par fibres selon la revendication 1 ou 2, le corps creux (1) présentant une forme conique dans le sens longitudinal (Z).

10. Absorbeur de chocs renforcé par fibres selon la revendication 1 ou 2, le corps creux (1) présentant une épaisseur de paroi (d) variable, conçue en échelons dans le sens longitudinal (Z).

11. Absorbeur de chocs renforcé par fibres selon la revendication 1 ou 2, le corps creux (1) présentant une épaisseur de paroi (d) augmentant en continu dans le sens longitudinal (Z).

12. Absorbeur de chocs renforcé par fibres selon la revendication 1 ou 2, le corps creux (1) étant un tissage de fibres renforcées.

13. Absorbeur de chocs renforcé par fibres selon la revendication 1, l'élément à nervure (2) présentant un profil en double T, les sections en forme de T (8, 9) de l'élément à nervure (2) étant reliées entre elles par une zone médiane (2a).

14. Absorbeur de chocs renforcé par fibres selon la revendication 13, les sections en forme de T (8, 9) de l'élément à nervure (2) reliant entre elles les surfaces latérales opposées (4, 5) plus rapprochées du corps creux (1) .

15. Absorbeur de chocs renforcé par fibres selon la revendication 1, l'élément à nervure (2) étant en un matériau renforcé par fibres.

16. Absorbeur de chocs renforcé par fibres selon la revendication 1, l'élément à nervure (2) étant un tissu multiaxial cousu.

17. Absorbeur de chocs renforcé par fibres selon la revendication 16, le tissu multiaxial cousu présentant des fibres orientées à 45° par rapport au sens longitudinal (Z) de l'élément à nervure (2).

18. Utilisation des absorbeurs de chocs renforcés par fibres selon l'une quelconque des revendications précédentes, en tant que longerons absorbeurs de chocs dans un véhicule de tourisme.

19. Utilisation des absorbeurs de chocs renforcés par fibres selon l'une quelconque des revendications 1 à 17 dans un avion, un hélicoptère ou un véhicule ferroviaire.
